# EUROPÄISCHE PATENTSCHRIFT

(11) **EP 1 369 447 B1**
(45) Veröffentlichungstag und Bekanntmachung des Hinweises auf die Patenterteilung: **07.12.2005**
(21) Anmeldenummer: 03010919.3
(22) Anmeldetag: 15.05.2003
(51) Int. Cl.: C08G 69/26, C08G 69/28

(54) **Transparente Polyamid-Formmassen mit verbesserter Transparenz, Chemikalienbeständigkeit und dynamischer Belastbarkeit**
Transparent polyamide moulding compositions having improved transparency, resistance to chemicals and dynamic stability
Masses de moulage transparentes à base de polyamide avec transparence, résistance chimique et stabilité dynamique améliorées

(30) Priorität: 05.06.2002 DE 10224947
(43) Veröffentlichungstag der Anmeldung: 10.12.2003
(73) Patentinhaber: EMS-Chemie AG, 7013 Domat/Ems (CH)
(72) Erfinder: Bühler, Friedrich Severin, Dr.rer.nat., 7430 Thusis (CH)
(74) Vertreter: Becker Kurig Straus

(56) Entgegenhaltungen:
- DE-A- 4 310 970
- DE-A- 19 642 885

## Beschreibung

Die Erfindung betrifft transparente Polyamid-Formmassen, die eine optimale Transparenz und optimale chemische Resistenz bei hoher dynamischer Belastbarkeit aufweisen. Insbesondere betrifft die vorliegende Erfindung transparente Polyamid-Formmassen, die aus Mischungen der Diamine PACM (Bis-(4-amino-cyclohexyl)-methan) und MACM (Bis-(4-amino-3-methylcyclohexyl)-methan) und langkettigen aliphatischen Dicarbonsäuren aufgebaut sind und eine optimale Transparenz und optimale chemische Resistenz bei hoher dynamischer Belastbarkeit aufweisen.

Weiterhin betrifft die vorliegende Erfindung Verfahren zur Herstellung der erfindungsgemässen Formmassen und Verfahren zur Herstellung und Weiterverarbeitung von Formteilen aus den erfindungsgemässen Formmassen. Die vorliegende Erfindung betrifft insbesondere Brillen und Brillengläser, die aus den erfindungsgemässen Formmassen herstellbar sind.

Im Bereich der transparenten Polyamide mit hoher Lichtdurchlässigkeit, ausgezeichneter dynamischer Belastbarkeit und ausgezeichneter chemischer Beständigkeit sind zwei Polymertypen bekannt.

Mikrokristalline, transparente Polyamidformmassen mit ausgezeichneter chemischer Beständigkeit, insbesondere gegenüber Alkoholen, die aus PACM mit 35 - 60 mol% trans,trans-Isomeren des Bis-(4-aminocyclohexyl)-methans, 65-40 mol% anderer Diamine und Dodecandisäure hergestellt sind, sind aus DE 43 10 970 bekannt. Nachteilig ist die niedrige Glasübergangs-Temperatur (Tg) von 140°C und die geringe Steifigkeit. Aufgrund der mikrokristallinen Phasen erreicht die Transparenz nicht das Optimum. Die dynamische Belastbarkeit liegt für diese Polyamidtypen, für definierte Anfangsbiegespannungen bei niedrigen Schwingspielzahlen.

Aus der EP-A-0 725 101 sind amorphe, transparente Polyamidformmassen mit hoher chemischer und thermischer Beständigkeit und ausgezeichneter dynamischer Belastbarkeit gegenüber Dauerschwingbelastung bekannt, die aus MACM (Bis-(4-amino-3-methyl-cyclohexyl)-methan) und Dodecandisäure aufgebaut werden. Gegenüber den mikrokristallinen transparenten Polyamiden ist die Beständigkeit gegenüber Alkoholen geringer. Die Transparenz ist vergleichbar zu den PACM12 Typen, liegt aber noch nicht im Optimum.

Amorphe, transparente Polyamidformmassen mit mindestens einem zweiten Homopolyamid, die neben den in der EP-A-0 725 101 beschriebenen Eigenschaften, eine hervorragende dynamische Belastbarkeit zeigen und zur Herstellung von Formkörpern für elektrooptische Anwendungen wie beispielsweise Linsen für Sonnenbrillen und Lichtwellenleiter geeignet sind, werden in DE 196 42 885 C2 beschrieben.

Bei mechanischer Beanspruchung der Oberflächen zeichnen sich transparente Polyamide durch hohe Abriebfestigkeit und gute Kratzfestigkeit aus, die durch eine Beschichtung mit Hartlacken noch verbessert werden kann.

Transparente Polyamide sind Hochleistungspolymere, die insbesondere im Bereich aggressiver Medien und im Bereich hoher Druckbelastung und hoher dynamischer Beanspruchung eingesetzt werden. Gleichzeitig weisen transparente Polyamide hohe Glasumwandlungs-Temperaturen (Tg) auf und erzielen hohe thermische Belastbarkeiten.

Aggressive Medien bei hohen Temperaturen liegen beispielsweise in Geschirrspülmaschinen oder medienführenden Systemen vor, denen transparente Massenwerkstoffe wie PS (Polystyrol), PMMA (Polymethylmethacrylat), PET (Polyethylenterephthalat), PVC (Polyvinylchlorid) oder PC (Polycarbonat) nicht standhalten. Anwendungsbeispiele sind Babyflaschen, Flaschen für Carbonisierung, Essgeschirr und Besteckgriffe. Chemikalienbeständigkeit in Verbindung mit thermischer Beständigkeit und dynamischer Belastbarkeit werden beispielsweise für Schaugläser im Bereich der Heizungstechnik und von Tankstellen mit direktem Benzin- oder Ölkontakt, Filtertassen für Trinkwasseraufbereitung und Medienfiltration, Durchflussmesser für Gase oder flüssige Medien, Lampengehäuse, Reflektoren für Autolampen und Sensoren gefordert. Die Bedeutung transparenter Polyamide für Ausseneinsätze nimmt zu, da durch eine Kombination von cycloaliphatischen Diaminen mit langkettigen aliphatischen Dicarbonsäuren hohe Witterungstabilitäten erzielt werden, die mit Stabilisatoren der Klasse tertiär-Butylphenole und HALS-Typen optimal eingestellt werden können.

Weiterhin verlangen Lackierprozesse chemische Resistenz zur Vermeidung von Spannungsrissen gegenüber den Lösungsmitteln, fordern aber gleichzeitig eine Aktivierbarkeit der Oberflächen, um eine optimale Lackhaftung zu erzielen. Zahlreiche Lacke, wie beispielsweise Hartlacke zur Erhöhung der Kratzfestigkeit, erfordern Härtungstemperaturen bis zu 130°C.

Hohe dynamische Belastbarkeiten, verbunden mit einer sehr guten thermischen und chemischen Resistenz, werden neben dem Maschinenbau und der Medizinaltechnik auch im Bereich von Brillen und Sicherheitsbrillen gefordert.

Aufgrund der günstigen optischen Eigenschaften, wie Brechungsindex und Abbe Zahl und Transparenz, können Brillengläser für Sonnenbrillen und Korrektionsbrillen hergestellt werden. Linsen für technische Geräte, Leuchten oder Signallampen, Optokoppler oder LED's sind ebenfalls herstellbar. Diese Anwendungen verlangen die optischen Eigenschaften sowie eine verbesserte Transparenz und Klarheit bei gleichzeitig hoher Temperaturbeständigkeit mit sehr geringer Verfärbung der Werkstoffe. Die Kombination von geeigneten Eigenschaften für Brillenrahmen und für Brillenlinsen von amorphen Polyamiden mit ausgezeichneter Chemikalien- und Spannungsrissresistenz erlaubt neue Designformen für Brillen mit Bohrungen für Fixierschrauben direkt im Brillenglas, was bei traditionell eingesetzten Materialien wie Glas, PC oder PMMA zu Rissen und Brüchen führt.

Aufgabe der vorliegenden Erfindung ist es, Formmassen auf Polyamidbasis bereitzustellen, die eine optimale Transparenz und optimale chemische Resistenz bei hoher dynamischer Belastbarkeit aufweisen, und daraus herstellbare Formteile bereitzustellen, um insbesondere Brillen oder Linsen mit einer optimalen Transparenz und optimalen chemischer Resistenz bei hoher dynamischer Belastbarkeit bereitzustellen.

Weiterhin ist es eine Aufgabe der vorliegenden Erfindung, Verfahren zur Herstellung der erfindungsgemässen Formmassen, Formteilen, Brillen und Linsen bereitzustellen.

Der in dieser Anmeldung verwendete Ausdruck PACM steht für die ISO-Bezeichnung Bis-(4-amino-cyclohexyl)-methan ist, welches unter dem Handelnamen 4,4'-Diaminodicyclohexylmethan als Dicykan-Typ (CAS Nr. 1761-71-3) kommerziell erhältlich ist. Der Ausdruck MACM steht für die ISO-Bezeichnung Bis-(4-amino-3-methyl-cyclohexyl)-methan, welches unter dem Handelsnamen 3,3'-Dimethyl-4,4'-diaminodicyclohexylmethan als Laromin C260-Typ (CAS Nr. 6864-37-5) kommerziell erhältlich ist.

Im Sinne der vorliegenden Erfindung ist beabsichtigt, dass die Ausdrücke PACM bzw. MACM alle Trivialnamen, Handelsnamen oder andere dem Fachmann geläufige Namen einschließen, die den chemischen Strukturen der vorstehenden Verbindungen entsprechen.

Erfindungsgemäß wird die Aufgabe durch die Breitstellung von transparenten Polyamid-Formmassen gelöst, die dadurch gekennzeichnet sind, dass die Polyamide eine Schmelzenthalpie von zwischen 0 und 12 J/g aufweisen, und die Polyamide aufgebaut sind aus
A. 100 Mol% einer Diaminmischung mit 10-70 Mol% PACM [Bis-(4-amino-cyclohexyl)-methan] mit weniger als 50 Gew.-% trans,trans-Isomeren und 90-30 Mol% MACM [Bis-(4-amino-3-methyl-cyclohexyl)-methan], wobei gegebenenfalls 0-10 Mol% durch andere aliphatische Diamine mit 6 bis 12 C-Atomen, cycloaliphatische, alkylsubstituierte cycloaliphatische, verzweigte aliphatische Diamine oder Multiamine mit 3 bis 12 Aminogruppen oder deren Mischung, ersetzt sein können, und
B. 100 Mol% langkettigen aliphatischen Dicarbonsäuren mit 8 bis 14 C-Atomen oder Mischungen dieser Dicarbonsäuren, wobei 0-10 Mol% durch andere aromatische oder cycloaliphatische Dicarbonsäuren mit 8 bis 16 C-Atomen ersetzt sein können, die ausgewählt sind aus der Gruppe, bestehend aus Isophthalsäure, Terephthalsäure, Naphthalindicarbonsäure, Cyclohexandicarbonsäure oder deren Mischungen, und wobei 0-10 Mol% der anderen langkettigen aliphatischen Diamine und 0-10 Mol% der anderen langkettigen aliphatischen Dicarbonsäuren wahlweise als 0-20 Mol% ω-Aminocarbonsäuren mit 6 bis 12 C-Atomen oder Lactamen mit 6 bis 12 C-Atomen zugegeben werden können.

Der besondere Vorteil der erfindungsgemässen Polyamid-Formmasse besteht darin, dass die eingesetzte Diaminmischung, die im Bereich 30-90% MACM und vorzugsweise im Bereich von 30-70% MACM liegt, eine optimale Transparenz und minimale Verfärbung bei maximaler Bruchdehnung zeigt. Gleichzeitig liegen Kerbschlag und chemische Beständigkeit auf hohem Niveau. Die chemische Beständigkeit ist so eingestellt, dass Formteile, die aus den erfindungsgemässen Polyamid-Formmassen hergestellt werden, mit üblichen Nachbehandlungstechiken z.B. lackieren, bedrucken, beschichten, bedampfen etc. behandelt werden können. Für eine Haupteigenschaft der transparenten Polyamide, die dynamische Belastbarkeit, die beispielsweise in Trinkwassersystemen, wo beim Öffnen und Schliessen der Hähne spontane Druckänderungen in hoher Zahl auftreten, gefordert wird, werden hervorragende Werte erhalten. Die dynamische Belastbarkeit, die in Form von Wechselbiegezyklen oder Schwingspielzahlen gemessen wird, erreicht in Formteilen, die aus den erfindungsgemässen Polyamid-Formmassen hergestellt sind, hohe Werte im Vergleich zu anderen Polyamiden und ein mehrfaches der erreichbaren Werte wie beispielsweise für Formteile aus Polycarbonat, Polystyrol, SAN oder Polymethylmethacrylat.

Transparente Polyamide, die aus aliphatischen, cycloaliphatischen oder alkylsubstituierten aliphatischen oder cyclaliphatischen Monomeren auf optimal eingestellten Grossanlagen (5-10 to) hergestellt werden, zeigen wegen fehlender Aromatenabsorption mit 92% bei 560 nm im Formteil mit 2mm Wandstärke eine höhere Lichttransmission im sichtbaren und im NIR Berreich als beispielsweise Polystyrol (PS) oder Polycarbonat (PC) mit 89% ähnlich den Polymethylmethacrylaten (PMMA) mit 92%. In hochwertigen transparenten Anwendungen ist die Lichttransmission von entscheidender Bedeutung und wird durch Vergütung der Oberflächen mit geeigneten Schutzlacken auf Maximalwerte gesteigert.

Die optimale Resistenz gegenüber Bildung von Spannungsrissen in beispielsweise Isopropanol wird im Bereich 45-0 Mol% MACM und 65-100 Mol% PACM erhalten. In diesem Bereich liegen kristalline Phasen vor, die die Transparenz nicht beeinträchtigen, und Schmelzenthalpien zwischen 8 und 25 J/g aufweisen.

Die Bruchspannung und Bruchdehnung der erfindungsgemässen Polyamid-Formmassen weisen im Bereich 30-90 mol% MACM und 70-10% PACM ein Optimum auf. Gleichzeitig werden Formteile mit hoher Kerbschlagzähigkeit und hoher dynamischer Belastbarkeit erhalten.

Eine mögliche Ursache für das vorteilhafte Verhalten der Transparenz der erfindungsgemässen Zusammensetzung ist die niedrige Kristallinität in einem definierten Bereich der Schmelzenthalpie von 0 bis 12 J/g und die Reduktion der alkylsubstituierten Diamine. Bei einer Schmelzenthalpie oberhalb 12 J/g nimmt die Transparenz wieder ab.

Gegenüber den reinen MACM12 und PACM12 Polyamidtypen, die auf Versuchsautoklaven hergestellt werden, steigt die Transparenz bei 540nm, gemessen an Platten aus unpolierten Werkzeugen mit 3mm Dicke, für eine Zusammensetzung der Diamine PACM/MACM von 60/40 mol% von 80 auf 85 % an. Für Platten aus polierten Werkzeugen liegt die Lichttransmission erfahrungsgemäss höher.

Gleichzeitig werden für den Bereich von 30 bis 40 mol% MACM, trotz konstanter Herstellungsbedingungen, niedere Verfärbungen nach ASTM D1925 an Platten mit 3mm Dicke gemessen.

Die Bruchspannung und die Bruchdehnung zeigen im Bereich 40-60 mol% MACM ebenfalls ein unerwartetes Maximum von 62 MPa und 160% Bruchdehnung.

Mit zunehmenden PACM-Anteil nimmt die Spannungsrissresistenz gegenüber Isopropanol von 15 auf 59 MPa Biegespannung bis zur Rissbildung zu und erreicht im erfindungsgemässen Zusammensetzungsbereich von 30-90 mol% MACM bereits das Maximum. Entsprechendes Verhalten wird auch für Hexan und Aceton gefunden.

Die Kerbschlagzähigkeit bei 23°C liegt für alle Zusammensetzungen auf stabilem Niveau von 11 KJ/m² und zeigt leichte Vorteile für hohe PACM Anteile mit 12 KJ/m². Diese Polyamidtypen zeichnen sich insbesondere dadurch aus, dass die Kerbschlagzähigkeiten auch bei -70°C gemessen, keinen Abfall zeigen, wie das von Polycarbonat (PC) und Polyester bekannt ist. Andere transparente Werkstoffe wie Polystyrol oder Polymethylmethacrylat weisen bereits bei 23°C 5 bis 10 mal tiefere Werte auf.

Im Wechselbiegetest bei ca. 50 MPa Anfangsbiegespannung erreichen die erfindungsgemässen Polyamid-Formmassen, die auf Versuchsautoklaven hergestellt werden, im Zusammensetzungsbereich 20-40 mol% MACM mit Schwingspielzahlen von 0,3 bis 0,4 Mio. Zyklen ein Maximum und zeigen höchste dynamische Belastbarkeit. Werden die Polyamid-Formmassen auf Produktionsanlagen mit 1 bis 10 Kubikmeter Kesselvolumen hergestellt, liegen die Werte erfahrungsgemäss höher, mit 1,0 Mio. Zyklen für MACM12 und 0,6 Mio. Zyklen für PACM12.

Bevorzugt sind transparente Polyamid-Formmassen, die aus 100 Mol% einer Diaminmischung mit 30-70 Mol% Bis-(4-amino-cyclohexyl)-methan mit weniger als 50 Gew.% trans,trans Isomeren und 70-30 Mol% Bis-(4-amino-3-methyl-cyclohexyl)-methan und aus 100 Mol% Dodecandisäure (DDS) oder Sebazinsäure (SS) oder Azelainsäure (AS) oder deren Mischungen aufgebaut sind.

Besonders bevorzugt sind transparente Polyamid-Formmassen, die aus 100 Mol% einer Diaminmischung mit 40-70 Mol% Bis-(4-amino-cyclohexyl)-methan mit weniger als 50 Gew.% trans,trans Isomeren und 60-30 Mol% Bis-(4-amino-3-methyl-cyclohexyl)-methan und aus 100 Mol% Dodecandisäure aufgebaut sind.

Besonders bevorzugt sind transparente Polyamid-Formmassen, die aus 100 Mol% einer Diaminmischung mit 50-70 Mol% Bis-(4-amino-cyclohexyl)-methan mit weniger als 50 Gew.% trans,trans Isomeren und 50-30 Mol% Bis-(4-amino-3-methyl-cyclohexyl)-methan und aus 100 Mol% Dodecandisäure aufgebaut sind.

Weiterhin sind Polyamid-Formmassen besonders bevorzugt, die aus aus 100 Mol% einer Diaminmischung mit 50-70 Mol% Bis-(4-amino-cyclohexyl)-methan mit weniger als 50 Gew.% trans,trans Isomeren des Typs Dicykan mit Handelsnamen 4,4'-Diaminodicyclohexylmethan (CAS-Nr. 1761-71-3 der Fa. BASF) und 50-30 Mol% Bis-(4-amino-3-methyl-cyclohexyl)-methan des Typs Laromin C260 mit Handelsnamen 3,3'-Dimethyl-4,4' diaminodicyclohexylmethan (CAS-Nr. 6864-37-5 der Fa. BASF) und aus 100 Mol% Dodecandisäure aufgebaut sind.

Zur Einstellung der gewünschten relativen Viskosität, gemessen in 0,5% iger m-Kresollösung von 1,65-2,00, bevorzugt 1,80 bis 1,95, können entweder das Diamin oder die Dicarbonsäuren in geringem Überschuss von 0,01 bis 1 Mol% eingesetzt werden. Bevorzugt wird die Regelung mit Monoamin oder Monocarbonsäuren von 0,01 bis 2,0 Gew.%, bevorzugt 0,05 bis 0,5 Gew.%

Geeignete Regler sind Benzoesäure, Essigsäure, Propionsäure, Stearylamin oder deren Mischungen. Besonders bevorzugt sind Regler mit Amin- oder Carbonsäuregruppen, die Stabilisatorgruppen des Typs HALS oder des Typs tertiär-Butyl-Phenol enthalten wie beispielsweise Triacetondiamin oder Isophthalsäure-Di-Triacetondiamin-Derivate.

Geeignete Katalysatoren zur Beschleunigung der Polykondensationsreaktion sind phosphorhaltige Säuren wie beispielsweise H₃PO₂, H₃PO₃, H₃PO₄, deren Salze oder organischen Derivate, die gleichzeitig zu Reduktion der Verfärbung während der Verarbeitung führen. Die Katalysatoren werden im Bereich von 0,01-0,5 Gew.%, bevorzugt 0,03 bis 0,1 Gew.% zugegeben.

Geeignete Entschäumer zur Vermeidung der Schaumbildung während der Entgasung sind wässrige Emulsionen, die Silicone oder Siliconderivate im Bereich von 0,01 bis 1,0 Gew.%, bevorzugt 0,01 bis 0,10 bei 10%iger Emulsion enthalten.

Geeignete Hitze- oder UV-Stabilisatoren können bereits vor der Polycondensation dem Ansatz in Mengen von 0,01 bis 0,5 Gew.% zugegeben werden. Bevorzugt werden hochschmelzende Typen eingesetzt. Besonders bevorzugt wird Irganox 1098 verwendet.

Die Herstellung der erfindungsgemässen Polyamid-Formmasse erfolgt in bekannten Druckgefäßen. Zunächst wird eine Druckphase bei 260-310°C gefahren. Danach folgt die Entspannung bei 260-310°C. Die Entgasung wird bei 260-310°C durchgeführt. Anschließend wird die Polyamid-Formmasse in Strangform ausgetragen, im Wasserbad mit 5-80° gekühlt und granuliert. Das Granulat wird 12h bei 80°C auf einen Wassergehalt unter 0,06% getrocknet.

Während der Trocknung mit gleichzeitiger Umwälzung des Granulates können Additive wie Gleitmittel, Farbstoffe, Stabilisatoren oder andere auf das Granulat aufgetragen oder aufgesintert werden.

Die Ausrüstung der erfindungsgemässen, transparenten Formmassen mit Additiven wie beispielsweise Stabilisatoren; Gleitmittel wie beispielsweise Paraffinöle oder Stearate; Farbstoffe; Füllstoffe; Schlagzähmodifikatoren wie beispielsweise Terpolymere aus Ethylen-Glycidyl-Methacrylat, bevorzugt mit einem Brechungsindex im Bereich der erfindungsgemässen Formmassen oder Maleinsäureanhydrid gepfropfte Polyethylene, Propylene; oder Verstärkungsstoffen wie beispielsweise transparent dispergierbare Nano-Partikel oder Glaskugeln oder Glasfasern; oder Mischungen der Additive; kann auch durch eine nachfolgende bekannte Mischverfahren, insbesondere Extrusion auf Ein- oder Mehrwellenextrudern mit Massetemperaturen zwischen 250 bis 350°C erfolgen, erhöht aber den Gelbstich, der durch Zugabe von H₃PO₃ oder anderen Phosporverbindungen deutlich reduziert werden kann.

Besonders geeignete Stabilisatoren zur Herstellung von erfindungsgemässen Polyamid-Formmassen nach dem Extrusionsverfahren für Anwendungen im Außenbereich wie beispielsweise Brillengläser, Uhrengehäuse, Filtertassen, Lampengehäuse, Schutzabdeckungen, Verglasungen, Sport und Freizeitartikel, oder Schaugläser an Zapfsäulen sind UV-Stabilisatoren vom HALS-Typ wie beispielsweise Tinuvin 770 und Tinuvin 312 und Antioxidantien von tertiär-Butylphenol-Typ wie Irganox 1010, Irganox 1070, Irganox 1098, die einzeln oder in Kombination verwendet werden können.

Besonders geeignete Additive zur Herstellung von erfindungsgemässen Polyamid-Formmassen nach dem Extrusionsverfahren für Anwendungen wie beispielsweise Brillengläser sind UV-Absorber, die Wellenlängen unterhalb 400 nm vollständig ausfiltern, wie beispielsweise Tinuvin 327 oder 326 oder 312, die in Mengen von 0,1 bis 1,0 Gew.% zugegeben werden. Weiterhin sind im Polyamid dispergierbare Farbstoffe besonders geeignete Additive.

Transparente Blends, die über ein Extrusionsverfahren auf Ein- oder Mehrwellenextrudern mit Massetemperaturen zwischen 250 bis 350°C mit 100 bis 30 Gew.% der erfindungsgemässen, transparenten Formmassen und 0 bis 70 Gew% Polyamid 12 oder Polyamid 11 herstellbar sind, können weiterhin eine zweite mikrokristalline Phase mit Schmelzpunkt 170-175°C enthalten, welche die chemische Beständigkeit weiter verbessert.

Geeignete Verfahren zur Herstellung hochtransparenter Formteile aus den erfindungsgemässen, transparenten Polyamid-Formmassen sind Spritzgiessverfahren, Spritzprägeverfahren bei Massetemperaturen von 230 bis 320°C, wobei das Werkzeug mit Temperaturen von 40 bis 120°C eingestellt wird.

Besonders geeignete Verfahren zur Herstellung hochtransparenter Formteile aus den erfindungsgemässen, transparenten Polyamid-Formmassen sind Spritzgiessverfahren, Spritzprägeverfahren bei Massetemperaturen von 230 bis 320°C, wobei das Werkzeug mit Temperaturen von 40 bis 130°C nach dem Füllen der Kavität einen Prägedruck auf das heisse Formteil aufbringt.

Besonders geeignete Verfahren zur Herstellung von fehlerfreien, spannungsarmen Oberflächen des Formteils aus den erfindungsgemässen, transparenten Polyamid-Formmassen wie beispielsweise Linsen für Brillen, ist ein Expansionspritzsprägesprozess, wobei Kavitäten mit Wandstärken von 1-5 mm gefüllt werden und anschliessend die Werkzeugkavität bei permanenter Füllung auf höhere Wandstärken auseinander gefahren wird.

Geeignete Verfahren zur Herstellung von Folien, Rohren und Halbzeugen in Ein- oder Mehrschichtausführung aus den erfindungsgemässen, transparenten Polyamid-Formmassen sind Extrusionsverfahren auf Ein- oder Mehrwellenextrudern mit Massetemperaturen zwischen 250 bis 350°C, wobei je nach Verträglichkeit der verschiedenen Schichten geeignete Haftvermittler in Form entsprechender Copolymerer oder Blends eingesetzt werden können.

Formteile, die aus den erfindungsgemässen Polyamid-Formmassen aufgebaut sind, können miteinander nach üblichen Verfahren wie beispielsweise durch Ultraschallschweißen, Glühdrahtschweißen, Friktionsschweißen, Rotationsschweißen oder Laserschweißen durch Ausrüstung mit laseraktiven Farbstoffen mit Absorption im Bereich 800 bis 2000 nm, miteinander verbunden werden.

Geeignete Verfahren zur Herstellung von Hohlkörpern und Flaschen in Ein- oder Mehrschichtausführung aus den erfindungsgemässen, transparenten Polyamid-Formmassen sind Spritzblasverfahren, Spritzstreckblasverfahren und Extrusionsblasverfahren.

Geeignete Verwendungen für Formteile, die aus den erfindungsgemässen, transparenten Polyamid-Formmassen aufgebaut sind, sind Schaugläser für Heizungstechnik mit direktem Ölkontakt, Filtertassen für Trinkwasseraufbereitung, Babyflaschen, Flaschen für Carbonisierung, Essgeschirr, Durchflussmesser für Gase oder flüssige Medien, Uhrengehäuse, Gehäuse für Armbanduhren, Lampengehäuse und Reflektoren für Autolampen.

Besonders geeignete Verwendungen für Formteile, die aus den erfindungsgemässen, transparenten Polyamid-Formmassen aufgebaut sind, sind Brillengläser für Sonnenbrillen oder Sicherheitsbrillen, Linsen für Korrektionsbrillen, Linsen für technische Geräte, Fresnell-Linsen für Projektoren, Leuchten oder Signallampen und Prismen.

Aus der erfindungsgemässen Polyamid-Formmasse nach einem besonders geeigneten Verfahren herstellbare Brillengläser, können im Tauchverfahren mit alkoholischen, esterbaltigen, ketonhaltigen oder wasserbasierenden Pigmentlösungen eingefärbt werden, durch Eintauchen in Aceton korrigiert und mit üblichen Hartlacken lackiert werden, die thermisch oder UV härtend sein können und UV-Schutz oder Farbpigmente oder Antistatikausrüstung oder Antibeschlagausrüstung oder andere funktionelle Additive enthalten können.

Aus der erfindungsgemässen Polyamid-Formmasse nach dem besonders geeigneten Verfahren herstellbare Brillengläser können im Bedampfungsverfahren mit Metallen beschichtet, entspiegelt, verspiegelt oder in anderer üblichen Form ausgerüstet werden.

Weiterhin können aus der erfindungsgemässen Polyamid-Formmasse nach dem besonders geeigneten Verfahren herstellbare Brillengläser durch Hinterspritzen mit entsprechend modifizierten Polarisationsfolien oder Verbunden aus der erfindungsgemässen Formmasse mit Polarisationsfolie hergestellt werden.

Alternativ können aus der erfindungsgemässen Polyamid-Formmasse nach dem besonders geeigneten Verfahren herstellbare Brillengläser durch Hinterspritzen mit entsprechend modifizierten phototropen Substanzen ausgerüsteten Schutzfolien der erfindungsgemässen Polyamid-Formmasse hergestellt werden.

Brillengläser, die aus der erfindungsgemässen Polyamid-Formmasse aufgebaut sind, können in alle handelsüblichen Brillengestelle eingepasst werden, ohne dass beispielsweise weichmacherhaltige Brillengestelle Spannungsrisse im Brillenglas auslösen oder Metallrahmen durch zu hohe Einpassspannungen Risse oder Brüche im Brillenglas erzeugen.

Brillenrahmen und Brillengläser, die aus den erfindungsgemässen Polyamid-Formmassen aufgebaut sind, können direkt in einer Form als einstückige, komplette Brille, bestehend aus Glas, Rahmen und Bügel hergestellt werden.

Bevorzugte Fügeverfahren für modernes Brillendesign von Brillenrahmen und Brillengläser, die aus den erfindungsgemässen Polyamid-Formmassen aufgebaut sind, sind geschraubte Verbindungen, wobei die Bohrungen direkt im Brillenglas angebracht sind.

Bevorzugte Befestigungsverfahren für modernes Brillendesign von Brillenrahmen und Brillengläser, die aus den erfindungsgemässen Polyamid-Formmassen aufgebaut sind, sind geklemmte, oder lösbare Schnappverbindungen, wobei mindestens ein Befestigungselement direkt in der Kontur des Brillenglases eingebracht ist.

Die Erfindung wird nun durch Beispiele erläutert, die jedoch nur veranschaulichend sind und den Schutzumfang der Erfindung nicht einschränken.

Die Herstellung der erfindungsgemässen Polyamid-Formmasse erfolgt in bekannten Versuchs-Druckautoklaven mit 130L Volumen. Zunächst wird eine Druckphase bei 290°C gefahren. Danach folgt die Entspannung bei 280°C. Die Entgasung wird bei 280°C durchgeführt. Anschliessend wird die Polyamid-Formmasse in Strangform ausgetragen, im Wasserbad mit RT gekühlt und granuliert. Das Granulat wird 12h bei 80°C auf einen Wassergehalt unter 0,06% getrocknet.

Die Herstellung hochtransparenter Formteile aus den erfindungsgemässen, transparenten Polyamid-Formmassen wurde auf einer Arburg Spritzgiessmaschine bei Massetemperaturen von 280°C durchgeführt, wobei das Werkzeug auf die Temperatur von 60°C eingestellt wurde.

Die Erfindung wird nun anhand der folgenden, nicht einschränkenden Beispiele näher beschrieben.

### Vergleichsbeispiel 1 (DE 196 42 885 C2)

17,91 kg MACM (Laromin C 260 = 3,3'-Dimethyl-4,4'-diaminodicyclohexylmethan; CAS-Nr. 6864-37-5 der Fa. BASF), 17,04 kg DDS (Dodecandisäure; DuPont), 48,65 g Benzoesäure, 8,75 g unterphosphorige Säure, 40g Irganox 1098 (Ciba) und 40 kg Weichwasser wurden in einen 130L Druckautoklaven gegeben. Anschliessend wurde der Autoklav verschlossen und auf 290°C unter Rühren aufgeheizt. Nach einer Druckphase von 2h wurde innerhalb von 1,5h auf Außendruck entspannt und ca. 1h bei 280°C entgast. Danach wurde das Material in Strängen ausgetragen, im Wasserbad gekühlt, granuliert und 12h bei 80°C getrocknet. Es entsteht ein transparentes Material mit Kenndaten gemäss Tabelle 1.

### Beispiele 2-7

Die Zusammensetzung der Diamine MACM (Laromin C 260 = 3,3'-Dimethyl-4,4'-diaminodicyclohexylmethan; CAS-Nr. 6864-37-5 der Fa. BASF) und PACM (Dicykan= 4,4'-Diaminodicyclohexylmethan; CAS-Nr. 1761-71-3 der Fa. BASF) ist gemäss Tabelle 1 und die übrige Zusammensetzung ist gemäss Vergleichsbeispiel 1. Die Fahrweise wurde analog zu Vergleichsbeispiel 1 durchgeführt. Es entstehen Materialien gemäss den Kenndaten in Tabelle 1.

### Vergleichsbeispiel 8 (DE 43 10 970)

Die Zusammensetzung PACM (Dicykan= 4,4'-Diaminodicyclohexylmethan; CAS-Nr. 1761-71-3 der Fa. BASF) ist gemäss Tabelle 1/VB8 und die übrige Zusammensetzung ist gemäss Vergleichsbeispiel 1. Die Fahrweise wurde analog zu Vergleichsbeispiel 1 durchgeführt. Es entstehen Materialien gemäss den Kenndaten in Tabelle 1.

**Tabelle 1:**

| Versuchsresultate | | | | | | | | | |
|---|---|---|---|---|---|---|---|---|---|
| Beispiel | | VB1 | B2 | B3 | B4 | B5 | B6 | B7 | VB8 |
| | | Mol % | Mol % | Mol % | Mol % | Mol % | Mol % | Mol % | Mol % |
| MACM | Laromin C260 | 100 | 75 | 50 | 40 | 35 | 30 | 25 | 0 |
| PACM | Dicykan | 0 | 25 | 50 | 60 | 65 | 70 | 75 | 100 |
| DDS | | 100 | 100 | 100 | 100 | 100 | 100 | 100 | 100 |
| | | | | | | | | | |
| RV/0,5%m-Kr | | 1,75 | 1,81 | 1,84 | 1,84 | 1,90 | 1,91 | 1,90 | 1,91 |
| Feuchtegehalt | % | 0,044 | 0,057 | 0,014 | 0,021 | 0,051 | 0,162 | 0,035 | 0,011 |
| Tg/DSC | °C | 152 | 149 | 148 | 148 | 147 | 147 | 145 | 140 |
| Schmp/DSC | °C | -- | -- | -- | 233 | 235 | 238 | 239 | 251 |
| Schm.Enthal/DSC | J/g | -- | -- | -- | 6,7 | 9,1 | 11,5 | 20 | 22 |
| | | | | | | | | | |

| Eigenschaften | | | | | | | | | |
|---|---|---|---|---|---|---|---|---|---|
| T540nm/3mm | % | 80,0 | 82,6 | 84,4 | 84,9 | 85,3 | 84,4 | 83,4 | 80,5 |
| YI/3mm | | 4,5 | 3,0 | 2,1 | 1,6 | 0 | 0 | 2,5 | 4,2 |
| | | | | | | | | | |
| Chargen-Nr. | | S596 | 6551 | 6552 | 6601 | 6600 | 6599 | 6598 | 6554 |
| Biegespannung | MPa | 75 | 47 | 54 | 47,5 | 52 | 48 | 49 | 49 |
| Schwingspielzahl | 1000 Zyklen | 100 | 61 | 173 | 395 | 342 | 386 | 362 | 193 |
| KSZ/23°C/trocken | KJ/m2 | 11 | 12 | 12 | 11 | 11 | 11 | 12 | 13 |
| Bruchdehn./trocken | % | 100 | 142 | 162 | 155 | 148 | 143 | 140 | 126 |
| Bruchspan./trocken | MPa | 50 | 57 | 62 | 60 | 58 | 56 | 55 | 50 |
| E-Modul/trocken | MPa | 1530 | 1490 | 1460 | 1460 | 1460 | 1460 | 1450 | 1430 |
| SRB/n-Hexan | MPa | 43 | 44 | 52 | 59 | 59 | 59 | 59 | 58 |
| SRB/Aceton | MPa | 38 | 41 | 59 | 59 | 59 | 59 | 59 | 58 |
| SRB/Isopropanol | MPa | 15 | 10 | 19 | 22 | 52 | 59 | 59 | 58 |

Die Analyse des trans, trans Anteils von PACM (Dicykan= 4,4'-Diaminodicyclohexylmethan; CAS-Nr. 1761-71-3 der Fa. BASF) wurde über die GC-Methode mit FID-Detektor bestimmt. Dazu werden 100mg Dicykan in 10ml Dichlormethan gelöst.

| Peak | Retentionszeit [Min.] | Anteil [Flächen %] | Zuordnung Isomere |
|---|---|---|---|
| 1 | 9,747 | 0,770 | |
| 2 | 9,804 | 0,374 | |
| 3 | 9,995 | 0,402 | |
| 4 | 10,097 | 47,248 | Trans, trans |
| 5 | 10,202 | 41,469 | |
| 6 | 10,276 | 9,737 | |
| | Summe | 100 | |

Die Messung der relativen Viskosität (RV) wird an Lösungen in 0,5% m-Kresol bei 23°C durchgeführt.

Glastemperaturen (Tg), Schmelztemperatur und Schmezenthalpie wurden auf einem üblichen DSC Apparat mit Aufheizraten von 20°C pro Minute gemessen.

Die Messung der Lichttransmission (T540 nm) wurde auf einem UV-Spektrometer der Fa. Perkin Elmer an Platten mit 3mm Dicke durchgeführt. Die absolute Transparenz der Formmassen, die auf kleinen Versuchsanlagen hergestellt sind, zeigt erfahrungsgemäss, aufgrund ihren niedrigeren Reinheit, tiefere Werte im Vergleich zu Formmassen, die auf Grossanlagen hergestellt sind. Relative Vergleiche sind aber durchaus möglich.

Die Messung des Yellow Index (YI) wurde nach ASTM D 1925 an Platten mit 3mm Dicke durchgeführt.

Der Feuchtegehalt wurde nach der Methode ISO 155/12 gemessen, wobei die Feuchte durch Erwärmen ausgetrieben und der Karl Fischer Lösung zugeführt wird.

Die Kerbschlagzähigkeit (KSZ) wurde nach ISO 179 / eA bestimmt.

Die übrigen mechanischen Eigenschaften wie Bruchdehnung, Bruchspannung und E-Modul wurden nach ISO 527 bestimmt.

Zur Messung der Spannungsrissbeständigkeit (SBR) wurden ISO-Zugstäbe auf eine Schablone mit definierter Randfaserdehnung (Biegespannung) fixiert und 60 Sek in das zu prüfende Lösungsmittel getaucht. Die angegebenen Werte in MPa stellen die aufgegebene Biegespannung dar, bis der visuell keine Risse im Prüfkörper zu erkennen sind.

Die Messung der Wechselbiegeeigenschaften wurde in der Form von "Wöhler Kurven" auf einem Gerät der Fa. Dyna Mess, CIMTronic 2000 nach DIN53442 durchgeführt. Es ist die Schwingspielzahl bei einer Anfangsbiegespannung von ca. 50 MPa angegeben.

## Patentansprüche

1. Transparente Polyamid-Formmassen, **dadurch gekennzeichnet, dass** sie eine Schmelzenthalpie von zwischen 0 und 12 J/g aufweisen, und die Polyamide aufgebaut sind aus:
A. 100 Mol% einer Diaminmischung mit 10-70 Mol% PACM [Bis-(4-amino-cyclohexyl)-methan] mit weniger als 50 Gew.-% trans,trans-Isomeren und 90-30 Mol% MACM [Bis-(4-amino-3-methyl-cyclohexyl)-methan], wobei gegebenenfalls 0-10 Mol% durch andere aliphatische Diamine mit 6 bis 12 C-Atomen, cycloaliphatische, alkylsubstituierte cycloaliphatische, verzweigte aliphatische Diamine oder Multiamine mit 3 bis 12 Aminogruppen oder deren Mischung, ersetzt sein können, und
B. 100 Mol% langkettigen aliphatischen Dicarbonsäuren mit 8 bis 14 C-Atomen oder Mischungen dieser Dicarbonsäuren, wobei 0-10 Mol% durch andere aromatische oder cycloaliphatische Dicarbonsäuren mit 8 bis 16 C-Atomen ersetzt sein können, die insbesondere ausgewählt sind aus der Gruppe, bestehend aus Isophthalsäure, Terephthalsäure, Naphthalindicarbonsäure, Cyclohexandicarbonsäure oder deren Mischungen, und
wobei 0-10 Mol% der anderen langkettigen aliphatischen Diamine und 0-10 Mol% der anderen langkettigen aliphatischen Dicarbonsäuren wahlweise als 0-20 Mol% ω-Aminocarbonsäuren mit 6 bis 12 C-Atomen oder Lactamen mit 6 bis 12 C-Atomen zugegeben werden können.

2. Transparente Polyamid-Formmassen gemäß Anspruch 1, **dadurch gekennzeichnet, dass** die Polyamide aufgebaut sind aus:
A. 100 Mol% einer Diaminmischung mit 30-70 Mol% PACM [Bis-(4-amino-cyclohexyl)-methan] mit weniger als 50 Gew.% trans,trans-Isomeren und 70-30 Mol% MACM [Bis-(4-amino-3-methyl-cyclohexyl)-methan] und
B. 100 Mol% Dodecandisäure (DDS) oder Sebazinsäure (SS) oder Azelainsäure (AS) oder deren Mischungen.

3. Transparente Polyamid-Formmassen gemäß Anspruch 1 oder 2, **dadurch gekennzeichnet, dass** die Polyamide aufgebaut sind aus:
A. 100 Mol% einer Diaminmischung mit 40-70 Mol% PACM [Bis-(4-amino-cyclohexyl)-methan] mit weniger als 50 Gew.% trans,trans-Isomeren und 60-30 Mol% mACM [Bis-(4-amino-3-methyl-cyclohexyl)-methan] und
B. 100 Mol% Dodecandisäure.

4. Transparente Polyamid-Formmassen gemäß irgendeinem der vorstehenden Ansprüche 1 bis 3, **dadurch gekennzeichnet, dass** die Polyamide aufgebaut sind aus:
A. 100 Mol% einer Diaminmischung mit 50-70 Mol% PACM [Bis-(4-amino-cyclohexyl)-methan] mit weniger als 50 Gew.% trans,trans Isomeren und 50-30 Mol% MACM [Bis-(4-amino-3-methyl-cyclohexyl)-methan] und
B. 100 Mol% Dodecandisäure.

5. Transparente Polyamid-Formmassen gemäß irgendeinem der vorstehenden Ansprüche 1 bis 4, **dadurch gekennzeichnet, dass** die Polyamid aufgebaut sind aus:
A. 100 Mol% einer Diaminmischung mit 50-70 Mol% PACM [Bis-(4-amino-cyclohexyl)-methan] mit weniger als 50 Gew.% trans,trans Isomeren des Typs Dicykan mit Handelsnamen 4,4'-Diaminodicyclohexylmethan (CAS-Nr. 1761-71-3) und 50-30 Mol% MACM [Bis-(4-amino-3-methyl-cyclohexyl)-methan] des Typs Laromin C260 mit Handelsnamen 3,3'-Dimethyl-4,4'-diaminodicyclohexylmethan (CAS-Nr. 6864-37-5) und aus
B. 100 Mol% Dodecandisäure.

6. Transparente Polyamid-Formmassen gemäß irgendeinem der vorstehenden Ansprüche 1 bis 5, **dadurch gekennzeichnet, dass** man zur Einstellung der relativen Viskosität, gemessen in 0,5% iger m-Kresollösung, von 1,65-2,00, bevorzugt 1,80 bis 1,95, entweder Diamin- oder Dicarbonsäure-Überschüsse in Mengen von 0,01 bis 1 Mol% verwendet oder mindestens einen Monoamin- oder Monocarbonsäure-Regler in Mengen von 0,01 bis 2,0 Gew.%, bevorzugt 0,05 bis 0,5 Gew.%, bei der Polykondensation einsetzt.

7. Transparente Polyamid-Formmassen gemäß Anspruch 6, **dadurch gekennzeichnet, dass** man als Monoamin- bzw. Monocarbonsäure-Regler Benzoesäure, Essigsäure, Propionsäure, Stearylamin oder deren Mischungen einsetzt, wobei insbesondere Regler mit Amin- oder Carbonsäuregruppen bevorzugt sind, die Stabilisatorgruppen des Typs HALS oder des Typs tertiär- Butylphenol enthalten, wobei besonders bevorzugt Triacetondiamin oder Isophthalsäure-di-Triacetondiamin-Derivate sind.

8. Transparente Polyamid-Formmassen gemäß irgendeinem der vorstehenden Ansprüche 1 bis 7, **dadurch gekennzeichnet, dass** man als geeignete Katalysatoren zur Beschleunigung der Polykondensationsreaktion phosphorhaltige Säuren, die ausgewählt sind aus der Gruppe, bestehend aus H₃PO₂, H₃PO₃, H₃PO₄, deren Salze oder organischen Derivate, die gleichzeitig zu Reduktion der Verfärbung während der Verarbeitung führen, in Mengen im Bereich von 0,01-0,5 Gew.%, bevorzugt 0,03 bis 0,1 Gew.%, einsetzt.

9. Transparente Polyamid-Formmassen gemäß irgendeinem der vorstehenden Ansprüche 1 bis 8, **dadurch gekennzeichnet, dass** man als geeignete Entschäumer zur Vermeidung der Schaumbildung während der Entgasung wässerige Emulsionen, die Silicone oder Siliconderivate enthalten, im Bereich von 0,01 bis 1,0 Gew.%, bevorzugt 0,01 bis 0,10 bei 10%iger Emulsion einsetzt.

10. Transparente Polyamid-Formmassen gemäß irgendeinem der vorstehenden Ansprüche 1 bis 9, **dadurch gekennzeichnet, dass** man als geeignete Hitze- oder UV-Stabilisatoren bereits vor der Polykondensation dem Ansatz in Mengen von 0,01 bis 0,5 Gew.% zugibt, wobei vorzugsweise hochschmelzende Typen eingesetzt, besonders bevorzugt tertiäre Butylphenole, insbesondere Irganox 1098 und HALS-Typen eingesetzt werden.

11. Verfahren zur Herstellung der Polyamid-Formmassen gemäß irgendeinem der Ansprüche 1 bis 10, **dadurch gekennzeichnet, dass** die Polyamide nach bekannten Verfahren in bekannten Druckgefäßen polykondensiert werden, mit einer Druckphase bei 260-310°C, einer Entspannungsphase bei 260-310°C, einer Entgasungsphase bei 260-310°C, wobei anschliessend Polyamid-Fonnmassen in Strangform ausgetragen, im Wasserbad mit 5-80° gekühlt und granuliert werden und das Granulat 12 Stunden bei 80°C auf einen Wassergehalt unter 0,06% getrocknet werden.

12. Verfahren zur Herstellung der Polyamid-Formmassen gemäß Anspruch 11, **dadurch gekennzeichnet, dass** während der Trocknung mit gleichzeitiger Umwälzung des Granulates Additive wie Gleitmittel, Farbstoffe, Stabilisatoren auf das Granulat aufgetragen oder aufgesintert werden.

13. Verfahren zur Herstellung der Polyamid-Formmassen gemäß Anspruch 11 oder 12, **dadurch gekennzeichnet, dass** Additive wie Stabilisatoren, Gleitmittel wie Paraffinöle oder Stearate, Farbstoffe, Füllstoffe, Schlagzähmodifikatoren wie Terpolymere aus Ethylen-GlycidylMethacrylat, bevorzugt mit Brechungsindex im Bereich von 1,50 bis 1,55, oder Maleinsäureanhydrid gepfropfte Polyethylene, Propylene, oder Verstärkungsstoffen wie transparente, nanoskalige Füllstoffe, insbesondere Nano-Silikate, oder Glaskugeln oder Glasfasern, oder Mischungen der Additive, durch bekannte Mischverfahren, insbesondere durch Extrusion auf Ein- oder Mehrwellenextrudern mit Massetemperaturen zwischen 250 bis 350°C, in die Polyamid-Formmassen eingearbeitet werden und der entstehende Gelbstich der Polpmid-Formmasse durch Zugabe von H₃PO₃ oder anderen Phosporverbindungen reduziert wird.

14. Verfahren zur Herstellung der Polyamid-Formmassen gemäß Anspruch 13, **dadurch gekennzeichnet, dass** für Anwendungen im Aussenbereich, insbesondere für Brillengläser, Uhrengehäuse, Filtertassen, Lampengehäuse oder Schaugläser an Zapfsäulen, Additive wie UV-Stabilisatoren vom HALS-Typ, ausgewählt aus der Gruppe, bestehend aus Tinuvin 770 und Tinuvin 312 und Antioxidantien von tertiär-Butylphenol-Typ, ausgewählt aus der Gruppe, bestehend aus Irganox 1010, Irganox 1070, Irganox 1098, einzeln oder in Kombination durch Extrusion in die Polyamid-Formmasse eingearbeitet werden.

15. Verfahren zur Herstellung der Polyamid-Formmassen gemäß irgendeinem der vorstehenden Ansprüche 11 bis 14, **dadurch gekennzeichnet, dass** Additive durch Extrusionsverfahren für Anwendungen wie Brillengläser, UV-Absorber mit Benztriazinstruktur, die Wellenlängen unterhalb 400 nm vollständig ausfiltem, in Mengen von 0,1 bis 1,0 Gew.% eingearbeitet werden und/oder im Polyamid dispergierbare Farbstoffe eingearbeitet werden.

16. Verfahren zur Herstellung von Polyamid-Formmassen gemäß irgendeinem der vorstehenden Ansprüche 13 bis 15, **dadurch gekennzeichnet, dass** sie als transparente Blends oder Legierungen vorliegen, herstellbar sind über ein Extrusionsverfahren auf Ein- oder Mehrwellenextrudern mit Massetemperaturen zwischen 250 bis 350°C aus einem Gemisch aus 100 bis 30 Gew.% der transparenten Polyamid-Fonnmassen gemäß irgendeinem der vorstehenden Ansprüche 1 bis 10 und 0 bis 70 Gew% Polyamid 12 oder Polyamid 11 oder Copolyamide daraus, wobei das Blend oder die Legierung eine zweite mikrokristalline Phase mit einem Schmelzpunkt von 170-175°C bildet.

17. Verfahren zur Herstellung hochtransparenter Formteile aus den Polyamid-Formmassen gemäß irgendeinem der vorstehenden Ansprüche 1 bis 10 oder 16, **dadurch gekennzeichnet, dass** Spritzgiessverfahren, Spritzprägeverfahren bei Massetemperaturen von 230 bis 320°C, wobei das Werkzeug mit Temperaturen von 40 bis 130°C angewendet wird.

18. Verfahren zur Herstellung hochtransparenter Formteile aus den erfindungsgemässen Polyamid-Formmassen gemäß irgendeinem der Ansprüche 1 bis 10 oder 16, **dadurch gekennzeichnet, dass** Spritzgiessverfahren, Spritzprägeverfahren bei Massetemperaturen von 230 bis 320°C angewendet werden, wobei das Werkzeug mit Temperaturen von 40 bis 130°C nach dem Füllen der Kavität einen Prägedruck auf das heisse Formteil aufbringt.

19. Verfahren zur Herstellung von fehlerfreien, spannungsarmen Oberflächen des Formteils aus den Polyamid-Formmassen gemäß irgendeinem der Ansprüche 1 bis 10 oder 16, **dadurch gekennzeichnet, dass** Linsen für Brillen durch einen Expansionspritzsprägesprozess hergestellt werden, wobei Kavitäten mit Wandstärken von 1-5 mm gefüllt werden und anschliessend die Werkzeugkavität bei permanenter Füllung auf höhere Wandstärken auseinander gefahren wird.

20. Verfahren zur Herstellung von Folien, Rohren und Halbzeugen in Ein- oder Mehrschichtausfuhrung aus den transparenten Polyamid-Formmassen gemäß irgendeinem der Ansprüche 1 bis 10 oder 16, **dadurch gekennzeichnet, dass** Extrusionsverfahren auf Ein- oder Mehrwellenextrudern mit Massetemperaturen zwischen 250 bis 350°C eingesetzt werden, wobei je nach Verträglichkeit der verschiedenen Schichtmaterialien geeignete Haftvermittler in Form entsprechender Copolymerer oder Blends aus Polymeren der Schichtmaterialien verwendet werden können.

21. Verfahren zur Herstellung von Hohlkörpern und Flaschen in Ein- oder Mehrschichtausführung aus den erfindungsgemässen, transparenten Polyamid-Formmassen gemäß irgendeinem der Ansprüche 1 bis 10 oder 16, **dadurch gekennzeichnet, dass** Spritzblasverfahren, Spritzstreckblasverfahren und Extrusionsblasverfahren eingesetzt werden.

22. Verwendungen von Formteilen, die aus den erfindungsgemässen, transparenten Polyamid-Formmassen gemäß irgendeinem der Ansprüche 1 bis 10 oder 16 herstellbar sind, als Schaugläser für Heizungstechnik mit direktem Ölkontakt, Filtertassen für Trinkwasseraufbereitung und Medienfiltration, Babyflaschen, Flaschen für Carbonisierung, Essgeschirr, Durchflussmesser für Gase oder flüssige Medien, Uhrengehäuse, Gehäuse für Armbanduhren, Lampengehäuse, Schutzabdeckungen, Verglasungen, Sport und Freizeitartikel, und Reflektoren für Autolampen und Sensoren.

23. Verwendungen von Formteilen, die aus den erfindungsgenlässen, transparenten Polyamid-Formmassen gemäß irgendeinem der Ansprüche 1 bis 10 oder 16 herstellbar sind, als Brillengläser für Sonnenbrillen oder Sicherheitsbrillen, Linsen für Korrektionsbrillen, Linsen für technische Geräte, Fresnell-Linsen für Projektoren, Leuchten oder Signallampen, Optokoppler, LED's Prismen.

24. Verfahren zur Herstellung von Brillengläsern, herstellbar aus den erfindungsgemässen Polyamid-Formmassen gemäß irgendeinem der Ansprüche 1 bis 10 oder 16, **dadurch gekennzeichnet, dass** sie nach dem Tauchverfahren in alkoholischen, esterhaltigen, ketonhaltigen oder wasserbasierenden Pigmentlösungen eingefärbt werden, durch Eintauchen in Aceton korrigiert und mit üblichen Hardcoatlacken, thermisch oder UV härtend, die UV-Schutz oder Farbpigmente oder Antistatikausrüstung oder Antibeschlagausrüstung oder andere funktionelle Additive enthalten können, lackiert werden.

25. Verfahren zur Herstellung von Brillengläsern, die aus den erfindungsgemässen Polyamid-Formmassen gemäß irgendeinem der Ansprüche 1 bis 10 oder 16 herstellbar sind, **dadurch gekennzeichnet, dass** nach dem besonders geeigneten Bedampfungsverfahren mit Metallen beschichtet, entspiegelt, verspiegelt oder in anderer üblichen Form ausgerüstet wird.

26. Verfahren zur Herstellung von Brillengläsern, die aus der erfindungsgemässen Polyamid-Formmassen gemäß irgendeinem der Ansprüche 1 bis 10 oder 16 herstellbar sind, **dadurch gekennzeichnet, dass** die Gläser, durch Hinterspritzen mit entsprechend modifizierten Polarisationsfolien oder Verbunden aus der erfindungsgemässen Polyamid-Formmasse mit Polarisationsfolie, hergestellt werden.

27. Verfahren zur Herstellung von Brillengläsern, die aus der erfindungsgemässen Polyamid-Formmassen gemäß irgendeinem der Ansprüche 1 bis 10 oder 16 herstellbar sind, **dadurch gekennzeichnet, dass** die Gläser durch Hinterspritzen mit entsprechend modifizierten phototropen Substanzen ausgerüsteten Schutzfolien hergestellt werden.

28. Brillengläser, die aus den erfindungsgemässen Polyamid-Formmassen gemäß irgendeinem der Ansprüche 1 bis 10 oder 16 herstellbar sind, **dadurch gekennzeichnet, dass** sie in alle handelsüblichen Brillengestelle eingepasst werden können, ohne dass weichmacherhaltige Brillengestelle Spannungsrisse im Brillenglas auslösen oder Metallrahmen durch zu hohe Einpassspannungen Risse oder Brüche im Brillenglas erzeugen.

29. Verfahren zur Herstellung von Formteilen, die aus den erfindungsgemässen Polyamid-Formmassen gemäß irgendeinem der Ansprüche 1 bis 10 oder 16 herstellbar sind, **dadurch gekennzeichnet, dass** sie mit sich selbst oder anderen verträglichen Formteilen nach üblichen Verfahren durch Ultraschallschweisen, Glühdrahtschweissen, Friktionsschweissen, Rotationsschweissen oder nach Ausrüstung mit laseraktiven Farbstoffen mit Absorption im Bereich 800 bis 2000 nm durch Laserschweissen, miteinander verbunden werden.

30. Brillenrahmen und Brillengläser, die aus den erfindungsgemässen Polyamid-Formmassen gemäß irgendeinem der Ansprüche 1 bis 10 oder 16 herstellbar sind, **dadurch gekennzeichnet, dass** sie direkt in einer Form als einstückige, komplette Brille, bestehend aus Glas, Rahmen und Bügel hergestellt werden.

31. Verfahren zur Herstellung von Brillen, die aus den erfindungsgemässen Polyamid-Formmassen gemäß irgendeinem der Ansprüche 1 bis 10 oder 16 herstellbar sind, wobei Fügeverfahren für modernes Brillendesign mit geschraubten Verbindungen angewendet werden, **dadurch gekennzeichnet, dass** die Bohrungen direkt im Brillenglas angebracht sind.

32. Befestigungsverfahren für modernes Brillendesign von Brillenrahmen und Brillengläser, die aus den erfindungsgemässen Polyamid-Formmassen gemäß irgendeinem der Ansprüche 1 bis 10 oder 16 herstellbar sind, mit geklemmten, oder lösbaren Schnappverbindungen, **dadurch gekennzeichnet, dass** mindestens ein Befestigungselement direkt in der Kontur des Brillenglases eingebracht ist.

## Claims

1. A transparent polyamide moulding material, **characterized in that** it has a melting enthalpy between 0 and 12 J/g and that the polyamides are composed of:
A. 100 mole-% of a diamine mixture having 10 to 70 mole-% of PACM [bis-(4-aminocyclohexyl)methane] with less than 50 wt.-% of trans,trans-isomers and 90 to 30 mole-% of MACM [bis-(4-amino-3-methyl-cyclohexyl)methane], wherein, if necessary, 0 to 10 mole-% may be replaced by other aliphatic diamines having 6 to 12 C atoms, cycloaliphatic, alkyl substituted cycloaliphatic, branched aliphatic diamines or multiamines having 3 to 12 amino groups or a mixture thereof, and
B. 100 mole-% of long-chain aliphatic dicarboxylic acids having 8 to 14 C atoms or mixtures of these dicarboxylic acids, wherein 0 to 10 mole-% may be replaced by other aromatic or cycloaliphatic dicarboxylic acids having 8 to 16 C atoms, particularly selected from the group consisting of isophthalic acid, terephthalic acid, naphthalenedicarboxylic acid, cyclohexanedicarboxylic acid or mixtures thereof, and wherein 0 to 10 mole-% of the other long-chain aliphatic diamines and 0 to 10 mole-% of the other long-chain aliphatic dicarboxylic acids optionally may be added as 0 to 20 mole-% of ω-aminocarboxylic acids having 6 to 12 C atoms or lactams having 6 to 12 C atoms.

2. The transparent polyamide moulding material according to claim 1, **characterized in that** said polyamides are composed of:
A. 100 mole-% of a diamine mixture having 30 to 70 mole-% of PACM [bis-(4-aminocyclohexyl)methane] with less than 50 wt.-% of trans,trans-isomers and 70 to 30 mole-% of MACM [bis-(4-amino-3-methyl-cyclohexyl)methane], and
B. 100 mole-% dodecanedioic acid (DDS) or sebacic acid (SS) or azelaic acid (AS) or mixtures thereof.

3. The transparent polyamide moulding material according to claim 1 or 2, **characterized in that** said polyamides are composed of:
A. 100 mole-% of a diamine mixture having 40 to 70 mole-% of PACM [bis-(4-aminocyclohexyl)methane] with less than 50 wt.-% of trans,trans-isomers and 60 to 30 mole-% of MACM [bis-(4-amino-3-methyl-cyclohexyl)methane], and
B. 100 mole-% dodecanedioic acid.

4. The transparent polyamide moulding material according to any one of the preceding claims 1 to 3, **characterized in that** said polyamides are composed of:
A. 100 mole-% of a diamine mixture having 50 to 70 mole-% of PACM [bis-(4-aminocyclohexyl)methane] with less than 50 wt.-% of trans,trans-isomers and 50 to 30 mole-% of MACM [bis-(4-amino-3-methyl-cyclohexyl)methane], and
B. 100 mole-% dodecanedioic acid.

5. The transparent polyamide moulding material according to any one of the preceding claims 1 to 4, **characterized in that** said polyamides are composed of:
A. 100 mole-% of a diamine mixture having 50 to 70 mole-% of PACM [bis-(4-aminocyclohexyl)methane] with less than 50 wt.-% of trans,trans-isomers of the dicycane type with commercial name 4,4'-diaminodicyclohexylmethane (CAS no. 1761-71-3) and 50 to 30 mole-% of MACM [bis-(4-amino- 3-methyl-cyclohexyl)methane] of the Laromin C260 type with commercial name 3,3'-dimethyl-4,4'-diaminodicyclohexylmethane (CAS no. 6864-37-5), and of
B. 100 mole-% dodecanedioic acid.

6. The transparent polyamide moulding material according to any one of the preceding claims 1 to 5, **characterized in that** for adjusting the relative viscosity, as measured in 0.5 % of m-cresol solution, of 1.65 to 2.00, preferred 1.80 to 1.95, either diamine or dicarboxylic acid excesses are used in amounts of 0.01 to 1 mole-% or at least one monoamine or monocarboxylic acid modifier is employed in amounts of 0.01 to 2.0 wt.-%, preferred 0.05 to 0.5 wt.-%, in the polycondensation.

7. The transparent polyamide moulding material according to claim 6, **characterized in that** benzoic acid, acetic acid, propionic acid, stearylamine or mixtures thereof are employed as a monoamine or monocarboxylic acid modifier, wherein particularly modifiers comprising amine or carboxylic acid groups which comprise stabilizer groups of the HALS type or of the tertiary butylphenol type are preferred, wherein triacetone diamine or isophthalic acid di-triacetone diamine derivatives are particularly preferred.

8. The transparent polyamide moulding material according to any one of the preceding claims 1 to 7, **characterized in that** phosphoric acids selected from the group consisting of H₃PO₂, H₃PO₃, H₃PO₄, salts or organic derivatives thereof, which simultaneously lead to reduction of the discoloration during processing, are employed in amounts in the range of 0.01 to 0.5 wt.-%, preferred from 0.03 to 0.1 wt.-%, as suitable catalysts for accelerating the polycondensation reaction.

9. The transparent polyamide moulding material according to any one of the preceding claims 1 to 8, **characterized in that** aqueous emulsions comprising silicones or silicone derivatives are employed in the range of 0.01 to 1.0 wt.-%, preferred 0.01 to 0.10 wt.-%, for 10% emulsion as suitable defoaming agents for preventing foam formation during degassing.

10. The transparent polyamide moulding material according to any one of the preceding claims 1 to 9, **characterized in that** as suitable heat or UV stabilizers are added to the formulation in amounts of 0.01 to 0.5 wt.-% already before the polycondensation, wherein highly melting types are preferably employed, particularly preferred tertiary butylphenols, particularly Irganox 1098 and HALS types are employed.

11. A method for producing the polyamide moulding material according to any one of claims 1 to 10, **characterized in that** said polyamides are polycondensed in known pressure vessels according to known methods with a pressure phase at 260 to 310°C, a pressure release phase at 260 to 310°C, a degassing phase at 260 to 310°C, wherein the polyamide moulding material arise subsequently discharged in strand form, cooled in a water bath with 5 to 80°C and pelletized, and the pellets are dried to a water content of below 0.06 % at 80°C for 12 hours.

12. The method for producing the polyamide moulding material according to claim 11, **characterized in that** additives such as lubricants, dyes, and stabilizers are applied to or sintered to said pellets during drying with simultaneous circulation of the pellets.

13. The method for producing the polyamide moulding material according to claim 11 or 12, **characterized in that** additives such as stabilizers, lubricants such as paraffin oils or stearates, dyes, fillers, impact modifiers such as terpolymers of ethylene glycidyl methacrylate, preferred having a refraction index in the range from 1.50 to 1.55, or maleic anhydride grafted polyethylenes, propylenes, or reinforcing agents such as transparent, nano-scale fillers, particularly nano-silicates, or glass balls or glass fibres, or mixtures of the additives are incorporated by known mixing methods, particularly by extrusion on one- or multi-shaft extruders with melt temperatures of between 250 to 350°C, into the polyamide moulding material and the resulting yellow tinge of the polyamide moulding material is reduced by adding H₃PO₃ or other phosphoric compounds.

14. The method for producing the polyamide moulding material according to claim 13, **characterized in that** additives such as UV stabilizers of the HALS type selected from the group consisting of Tinuvin 770 and Tinuvin 312 and antioxidant agents of the tertiary butylphenol type selected from the group consisting of Irganox 1010, Irganox 1070, Irganox 1098 are incorporated separately or in combination by extrusion into the polyamide moulding material for outdoor applications, in particular for lenses for eyeglasses, clock cases, filter cups, lamp cases or viewing glasses on petrol pumps.

15. The method for producing the polyamide moulding material according to any one of the preceding claims 11 to 14, **characterized in that** additives are incorporated by extrusion methods in amounts of 0.1 to 1.0 wt.-% and/or dyes dispersible in polyamide are incorporated for applications such as lenses for eyeglasses, UV absorbers having benztriazine structure completely filtering out wavelengths below than 400 nm.

16. The method for producing the polyamide moulding material according to any one of the preceding claims 13 to 15, **characterized in that** they are available as transparent blends or compositions are producible by an extrusion method on one- or multi-shaft extruders with melt temperatures of between 250 to 350°C from a mixture of 100 to 30 wt.-% of the transparent polyamide moulding material according to any one of the preceding claims 1 to 10 and 0 to 70 wt.-% polyamide 12 or polyamide 11 or copolyamides thereof, wherein the blend or the composition forms a second microcrystalline phase having a melting point of 170 to 175°C.

17. A method for producing highly transparent moulded articles of the polyamide moulding material according to any one of the preceding claims 1 to 10 or 16, **characterized in that** injection moulding methods and injection-compression methods at melt temperatures of 230 to 320°C, wherein the tool is applied with temperatures of 40 to 130°C.

18. A method for producing highly transparent moulded articles of the inventive polyamide moulding material according to any one of claims 1 to 10 or 16, **characterized in that** injection moulding methods and injection-compression methods at melt temperatures of 230 to 320°C are applied, wherein the tool having temperatures of 40 to 130°C applies an embossing pressure on the hot moulded article after filling of the cavity.

19. A method for producing faultless tension-reduced surfaces of the moulded article of a polyamide moulding material according to any one of claims 1 to 10 or 16, **characterized in that** lenses for eyeglasses are produced by an expansion injection-compression process, wherein cavities having wall thicknesses of 1 to 5 mm are filled and subsequently, the tool cavity is spread out to higher wall thicknesses at permanent filling.

20. A method for producing sheets, pipes and semi-finished products in single- or multi-layer construction of a transparent polyamide moulding material according to any one of claims 1 to 10 or 16, **characterized in that** extrusion methods are employed on one- or multi-shaft extruders with melt temperatures of between 250 to 350°C, wherein depending on a compatibility of the different layer materials, suitable bonding agents in the form of corresponding copolymers or blends of polymers of the layer materials can be used.

21. A method for producing hollow bodies and bottles in single- or multi-layer construction of the inventive transparent polyamide moulding material according to any one of claims 1 to 10 or 16, **characterized in that** injection blow methods, injection stretch blow methods, and extrusion blow methods are employed.

22. The use of moulded articles producible of the inventive transparent polyamide moulding material according to any one of claims 1 to 10 or 16 as viewing glasses for heating techniques with direct oil contact, filter cups for drinking water treatment and media filtration, baby bottles, bottles for carbonating, dinner-service, flowmeters for gases or liquid media, clock cases, cases of wrist watches, lamp cases, protection coverings, glazings, sport and leisure articles, and reflectors for car lamps and sensors.

23. The use of moulded articles producible of the inventive transparent polyamide moulding material according to any one of claims 1 to 10 or 16 as lenses for eyeglasses for sun glasses or safety glasses, lenses for correction-glasses, lenses for technical devices, Fresnell lenses for projectors, luminaires or signal lamps, photocouplers, LED's prisms.

24. A method for producing lenses for eyeglasses producible of the inventive polyamide moulding material according to any one of claims 1 to 10 or 16, **characterized in that** they are dyed according to the dipping method in alcoholic, ester-containing, ketone-containing or water-based pigment solutions, are corrected by dipping in acetone and coated by usual hard coat lacquers, thermal or UV curing, which can contain UV protection or dye pigments or antistatic finishing or anti-mist finishing or other functional additives.

25. A method for producing lenses for eyeglasses producible of the inventive polyamide moulding material according to any one of claims 1 to 10 or 16, **characterized in that** they are coated with metals according to the particularly suitable vapour-deposition method, lumenized, metal-coated or finished in other usual form.

26. A method for producing lenses for eyeglasses producible of the inventive polyamide moulding material according to any one of claims 1 to 10 or 16, **characterized in that** the lenses are produced by back moulding with correspondingly modified polarizing sheets or composites of the inventive polyamide moulding material with polarizing sheet.

27. A method for producing lenses for eyeglasses producible of the inventive polyamide moulding material according to any one of claims 1 to 10 or 16, **characterized in that** the lenses are produced by back moulding with correspondingly modified protecting sheets finished with phototropic substances.

28. Eyeglasses producible of the inventive polyamide moulding material according to any one of claims 1 to 10 or 16, **characterized in that** they can be adapted in all glasses frames customary in trade without plasticized spectacle frames causing stress cracks in the lens of the eyeglasses or metal frames generating cracks or breaks in the lens of the eyeglasses by too high adapting stresses.

29. A method for producing moulded articles producible of the inventive polyamide moulding materials according to any one of claims 1 to 10 or 16, **characterized in that** they are joined with themselves or other compatible moulded articles by common methods via ultrasonic welding, glowing wire welding, friction welding, spin welding, or by laser welding after finishing with lasing dyes having absorption in the range of 800 to 2000 nm.

30. Glasses frame and lenses for eyeglasses producible of the inventive polyamide moulding material according to any one of claims 1 to 10 or 16, **characterized in that** they are produced directly in a form as integral complete eyeglasses consisting of glass, frame, and earpiece.

31. A method for producing eyeglasses producible of inventive the polyamide moulding material according to any one of claims I to 10 or 16, wherein joining methods for modem eyeglasses design with screwed connections are applied, **characterized in that** the bores are arranged directly in the lens of the eyeglasses.

32. A connection method for modem eyeglasses design of glasses frames and lenses for eyeglasses producible of the inventive polyamide moulding material according to any one of claims 1 to 10 or 16, having clamped or detachable snap-on connections, **characterized in that** at least one fixing element is placed directly in the contour of the lens of the eyeglasses.

## Revendications

1. Masses de moulage transparentes à base de polyamide, **caractérisées en ce qu'**elles présentent une enthalpie de fusion comprise entre 0 et 12 J/g, et **en ce que** les polyamides sont constitués de :
A. 100 % en mole d'un mélange de diamines avec 10 à 70% en mole de PACM [bis-(4-amino-cyclohexyl)-méthane], avec moins de 50% en poids d'isomères trans-trans et 90 à 30% en mole de MACM [bis-(4-amino-3-méthyl-cyclohexyl)-méthane], sachant que le cas échéant, 0 à 10% en mole peuvent être remplacés par d'autres diamines aliphatiques avec 6 à 12 atomes de carbone, par des diamines ou par des multiamines avec 3 à 12 groupes amines, cycloaliphatiques, cycloaliphatiques substituées par des alkyles, aliphatiques ramifiées, ou par leurs mélanges, et
B. 100% en poids d'acides dicarboxyliques aliphatiques à longue chaîne à 8 à 14 atomes de carbone ou des mélanges de ces acides dicarboxyliques, sachant que 0 à 10% en mole peuvent être remplacés par d'autres acides dicarboxyliques, aromatiques ou cycloaliphatiques avec 8 à 16 atomes de carbone, qui sont choisis en particulier parmi le groupe constitué de l'acide isophtalique, de l'acide téréphtalique, de l'acide naphtalène dicarboxylique, de l'acide cyclohexane dicarboxylique ou par leurs mélanges et
sachant que 0 à 10% en mole des autres diamines aliphatiques à longue chaîne et 0 à 10% en mole des autres acides dicarboxyliques aliphatiques à longue chaîne peuvent être ajoutés au choix sous forme de 0 à 20% en mole d'acides ω-amino-carboxyliques avec 6 à 12 atomes de carbone ou de lactames avec 6 à 12 atomes de carbone.

2. Masses de moulage transparentes à base de polyamide selon la revendication 1, **caractérisées en ce que** les polyamides sont constitués de
A. 100% en mole d'un mélange de diamines avec 30 à 70% en mole de PACM [bis-(4-amino-cyclohexyl)-méthane], avec moins de 50% en poids d'isomères trans-trans et 70 à 30% en mole de MACM [bis-(4-amino-3-méthyl-cyclohexyl)-méthane] et
B. 100% en mole d'acide dodécanedioïque (DDS) ou d'acide sébacique (SS) ou d'acide azélaïque (AS) ou de leurs mélanges.

3. Masses de moulage transparentes à base de polyamide selon la revendication 1 ou 2, **caractérisées en ce que** les polyamides sont constitués de
A. 100% en mole d'un mélange de diamines avec 40 à 70% en mole de PACM [bis-(4-amino-cyclohexyl)-méthane], avec moins de 50% en poids d'isomères trans-trans et 60 à 30% en mole de MACM [bis-(4-amino-3-méthyl-cyclohexyl)-méthane] et
B. 100% en mole d'acide dodécanedioïque.

4. Masses de moulage transparentes à base de polyamide selon l'une quelconque des revendications 1 à 3, **caractérisées en ce que** les polyamides sont constitués de
A. 100% en mole d'un mélange de diamines avec 50 à 70% en mole de PACM [bis-(4-amino-cyclohexyl)-méthane], avec moins de 50% en poids d'isomères trans-trans et 50 à 30% en mole de MACM [bis-(4-amino-3-méthyl-cyclohexyl)-méthane] et
B. 100% en mole d'acide dodécanedioïque.

5. Masses de moulage transparentes à base de polyamide selon l'une quelconque des revendications 1 à 4, **caractérisées en ce que** les polyamides sont constitués de
A. 100% en mole d'un mélange de diamines avec 50 à 70% en mole de PACM [bis-(4-amino-cyclohexyl)-méthane], avec moins de 50% en poids d'isomères trans-trans du type Dicykan avec le nom commercial 4,4'-diaminodicyclohexylméthane (n° CAS 1761-71-3) et 50 à 30% en mole de MACM [bis-(4-amino-3-méthyl-cyclohexyl)-méthane] du type Laromin C260 avec le nom commercial 3,3'-diméthyl-4,4'-diaminodicyclohexyl-méthane (n° CAS 6864-37-5) et de
B. 100% en mole d'acide dodécanedioïque.

6. Masses de moulage transparentes à base de polyamide selon l'une quelconque des revendications 1 à 5, **caractérisées en ce que**, pour l'ajustement de la viscosité relative, mesurée en solution à 0,5% dans du m-crésol, à 1,65 à 2,00, de préférence à 1,80 à 1,95, on utilise des excès soit de diamine, soit d'acide dicarboxylique en des quantités de 0,01 à 1% en mole, ou **en ce que** l'on utilise lors de la polycondensation au moins un régulateur monoamine ou acide monocarboxylique en des quantités de 0,01 à 2,0% en poids, de préférence de 0,05 à 0,5% en poids.

7. Masses de moulage transparentes à base de polyamide selon la revendication 6, **caractérisées en ce que** l'on utilise comme régulateur monoamine, respectivement acide monocarboxylique de l'acide benzoïque, de l'acide acétique, de l'acide propionique, de la stéarylamine ou leurs mélanges, sachant qu'en particulier les régulateurs avec des groupes amines ou carboxyliques sont préférés qui contiennent des groupes stabilisateurs de type HALS ou du type tertiobutylphénol, sachant que la triacétonediamine ou les dérivés de l'acide isophtalique-di-triacétonediamine sont particulièrement préférés.

8. Masses de moulage transparentes à base de polyamide selon l'une quelconque des revendications 1 à 7, **caractérisées en ce que** l'on utilise comme catalyseurs appropriés pour l'accélération de la polycondensation des acides du phosphore qui sont choisis parmi le groupe consistant en H₃PO₂, H₃PO₃, H₃PO₄, leurs sels ou des dérivés organiques, qui conduisent en même temps à la réduction de la coloration pendant la transformation, dans des quantités dans la plage de 0,01 à 0,5% en poids, de préférence de 0,03 à 0,1% en poids.

9. Masses de moulage transparentes à base de polyamide selon l'une quelconque des revendications 1 à 8, **caractérisées en ce que** l'on utilise comme antimousses appropriés pour éviter la formation de mousse pendant le dégazage des émulsions aqueuses qui contiennent des silicones ou des dérivés de silicones, dans la plage de 0,01 à 1,0% en poids, de préférence de 0,01 à 0,10% en poids pour une émulsion à 10%.

10. Masses de moulage transparentes à base de polyamide selon l'une quelconque des revendications 1 à 9, **caractérisées en ce que** l'on ajoute au mélange comme stabilisateurs appropriés à la chaleur et aux UV, dès avant la polycondensation dans des quantités de 0,01 à 0,5% en poids, sachant que l'on utilise de préférence des types à haut point de fusion, de façon particulièrement préférée des butylphénols tertiaires, en particulier Irganox 1098 et des types HALS.

11. Procédé de fabrication de masses de moulage à base de polyamide selon l'une quelconque des revendications 1 à 10, **caractérisé en ce que** les polyamides sont polycondensés d'après des procédés connus dans des récipients à pression connus, avec une phase sous pression à 260-310 °C, une phase de détente à 260-310 °C, une phase de dégazage à 260-310 °C, sachant que les masses de moulage à base de polyamide sont ensuite extraites sous forme de boyaux, sont refroidies au bain d'eau à 5-80 °C et sont granulées et que le granulé est séché pendant 12 heures à 80 °C jusqu'à une teneur en eau de moins de 0,06%.

12. Procédé de fabrication de masses de moulage à base de polyamide selon la revendication 11, **caractérisé en ce que** pendant le séchage avec retournement simultané du granulé, des additifs tels des lubrifiants, des colorants, des stabilisateurs sont appliqués ou frittés sur le granulé.

13. Procédé de fabrication de masses de moulage à base de polyamide selon la revendication 11 ou 12, **caractérisé en ce que** des additifs tels des stabilisateurs, des lubrifiants tels des huiles de paraffine ou des stéarates, des colorants, des charges, des modificateurs de résilience comme des terpolymères en éthylène-glycidyl-méthacrylate, de préférence avec des indices de réfraction de 1,50 à 1,55, ou des polyéthylènes, propylènes à greffe d'anhydride de l'acide maléique ou des substances de renforcement comme des charges transparentes nanométriques, en particulier des nano-silicates, ou des billes de verre ou des fibres de verre, ou des mélanges des additifs sont incorporés dans les masses de moulage à base de polyamide par des procédés de mélangeage connus, en particulier par extrusion sur des extrudeuses à un ou plusieurs arbres avec des températures de la matière entre 250 et 350 °C, et **en ce que** le jaunissement produit de la masse de moulage à base de polyamide est réduit par addition de H₃PO₃ ou d'autres composés phosphorés.

14. Procédé de fabrication de masses de moulage à base de polyamide selon la revendication 13, **caractérisé en ce que** pour des applications dans le milieu extérieur, en particulier pour des verres de lunettes, des boîtiers de montre, des tasses de filtre, des boîtiers de lampe ou des regards sur des distributeurs de carburant, des additifs tels des stabilisateurs aux UV du type HALS, choisis parmi le groupe constitué des Tinuvin 770 et Tinuvin 312 et des anti-oxydants du type du butylphénol tertiaire, choisis parmi le groupe constitué des Irganox 1010, Irganox 1070, Irganox 1098, individuels ou en combinaison, sont incorporés par extrusion dans la masse de moulage à base de polyamide.

15. Procédé de fabrication de masses de moulage à base de polyamide selon l'une quelconque des revendications précédentes 11 à 14, **caractérisé en ce que** des additifs sont incorporés par le procédé d'extrusion, pour des applications comme des verres de lunettes, des absorbants d'UV avec une structure de benzotriazine qui filtrent complètement les longueurs d'onde en dessous de 400 nm, dans des quantités de 0,1 à 1,0% en poids, et/ou **en ce que** des colorants pouvant être dispersés dans le polyamide sont incorporés.

16. Procédé de fabrication de masses de moulage à base de polyamide selon l'une quelconque des revendications précédentes 13 à 15, **caractérisé en ce qu'**elles se présentent sous forme de mélanges ou d'alliages transparents, **en ce qu'**elles peuvent être fabriquées par un procédé d'extrusion sur des extrudeuses à un ou plusieurs arbres avec des températures de la matière entre 250 et 350 °C à partir d'un mélange de 100 à 30% en poids des masses de moulage transparentes à base de polyamide selon l'une quelconque des revendications précédentes 1 à 10 et de 0 à 70% en poids de polyamide 12 ou de polyamide 11 ou de copolyamides issus de ces derniers, sachant que le mélange ou l'alliage forme une deuxième phase microcristalline avec un point de fusion de 170-175 °C.

17. Procédé de fabrication de pièces moulées à haute transparence en des masses de moulage à base de polyamide selon l'une quelconque des revendications précédentes 1 à 10 ou 16, **caractérisé en ce qu'**un procédé de moulage par injection, un procédé de matriçage par injection sont utilisés à des températures de la matière de 230 °C à 320 °C, tandis que le moule est utilisé à des températures de 40 à 130 °C.

18. Procédé de fabrication de pièces moulées à haute transparence en des masses de moulage à base de polyamide selon l'une quelconque des revendications .1 à 10 ou 16, **caractérisé en ce qu'**un procédé de moulage par injection, un procédé de matriçage par injection sont utilisés à des températures de la matière de 230 °C à 320 °C, tandis que le moule exerce à des températures de 40 à 130 °C une pression de matriçage sur la pièce moulée chaude après le remplissage de l'empreinte.

19. Procédé d'obtention de surfaces sans défauts, à faibles tensions résiduelles, de la pièce moulée en des masses de moulage à base de polyamide selon l'une quelconque des revendications 1 à 10 ou 16, **caractérisé en ce que** des lentilles pour des lunettes sont fabriquées par un processus d'expansion, d'injection et de matriçage, dans lequel des cavités avec des épaisseurs de paroi de 1 à 5 mm sont remplies et dans lequel ensuite la cavité du moule est écartée pendant un remplissage permanent pour donner des épaisseurs de paroi supérieures.

20. Procédé de fabrication de feuilles, de tubes et de produits semi-finis en versions à une ou plusieurs couches en des masses de moulage transparentes à base de polyamide selon l'une quelconque des revendications 1 à 10 ou 16, **caractérisé en ce que** l'on utilise des procédés d'extrusion sur des extrudeuses à un ou plusieurs arbres avec des températures de la matière entre 250 et 350 °C, sachant que, selon la compatibilité des matériaux des différentes couches, on peut utiliser des agents de pontage appropriés sous la forme de copolymères correspondants ou de mélanges des polymères des matériaux des couches.

21. Procédé de fabrication de corps creux ou de bouteilles en versions à une ou plusieurs couches en des masses de moulage transparentes selon l'invention à base de polyamide selon l'une quelconque des revendications 1 à 10 ou 16, **caractérisé en ce que** l'on utilise des procédés d'injection-soufflage, d'injection-étirement-soufflage, et d'extrusion-soufflage.

22. Utilisation de pièces moulées pouvant être fabriquées à partir des masses de moulage transparentes selon l'invention, à base de polyamide selon l'une quelconque des revendications précédentes 1 à 10 ou 16 comme regards pour les techniques de chauffage, avec contact direct avec le mazout, comme tasses de filtre pour le traitement de l'eau potable et pour la filtration de fluides, comme biberons, comme bouteilles pour la gazéification, comme couverts, comme débitmètres pour des fluides gazeux ou liquides, comme boîtiers de montre, comme boîtiers pour des montres-bracelets, comme boîtiers de lampe, comme recouvrements de protection, comme vitrages, comme articles de sport et de loisir, et comme réflecteurs pour des lampes d'automobiles et pour des capteurs.

23. Utilisation de pièces moulées pouvant être fabriquées à partir des masses de moulage transparentes selon l'invention, à base de polyamide selon l'une quelconque des revendications précédentes 1 à 10 ou 16, comme verres de lunettes pour des lunettes de soleil ou des lunettes de sécurité, comme lentilles pour des lunettes correctrices, comme lentilles pour des appareils techniques, comme lentilles de Fresnel pour des projecteurs, comme lanternes ou comme lampes de signalisation, comme optocoupleurs, comme prismes de LED.

24. Procédé de fabrication de verres de lunettes pouvant être fabriqués à partir des masses de moulage selon l'invention, à base de polyamide selon l'une quelconque des revendications précédentes 1 à 10 ou 16, **caractérisé en ce qu'**ils sont teintés d'après le procédé par immersion dans des solutions de pigments alcooliques, contenant des esters, contenant des cétones, ou à base d'eau, **en ce qu'**ils sont corrigés par immersion dans l'acétone et qu'ils sont vernis avec des vernis d'enduction durs, durcissables thermiquement ou par UV, qui peuvent contenir des protecteurs contre les UV ou des pigments colorés ou un apprêt antistatique ou un apprêt anti-buée ou d'autres additifs fonctionnels.

25. Procédé de fabrication de verres de lunettes pouvant être fabriqués à partir des masses de moulage selon l'invention, à base de polyamide selon l'une quelconque des revendications précédentes 1 à 10 ou 16, **caractérisé en ce qu'**il comprend une métallisation d'après le procédé de métallisation particulièrement approprié, un traitement anti-reflets, un dépôt de couches réfléchissantes ou d'autres traitements habituels.

26. Procédé de fabrication de verres de lunettes pouvant être fabriqués à partir des masses de moulage selon l'invention, à base de polyamide selon l'une quelconque des revendications précédentes 1 à 10 ou 16, **caractérisé en ce que** les verres sont fabriqués par injection par l'arrière avec des feuilles de polarisations modifiées de façon appropriée ou en des composites de la masse de moulage selon l'invention, à base de polyamide, avec une feuille de polarisation.

27. Procédé de fabrication de verres de lunettes pouvant être fabriqués à partir des masses de moulage selon l'invention, à base de polyamide selon l'une quelconque des revendications précédentes 1 à 10 ou 16, **caractérisé en ce que** les verres sont fabriqués par injection par l'arrière avec des feuilles de protection apprêtées avec des substances phototropes convenablement modifiées.

28. Verres de lunettes pouvant être fabriqués à partir des masses de moulage selon l'invention, à base de polyamide selon l'une quelconque des revendications précédentes 1 à 10 ou 16, **caractérisé en ce qu'**ils peuvent être adaptés dans toutes les montures de lunettes du commerce, sans que des montures de lunettes contenant des plastifiants ne causent dans le verre de lunette des fissures par contraintes ou que des montures métalliques causent dans le verre de lunette des fissures ou des ruptures par un trop grand serrage de l'ajustement.

29. Procédé de fabrication de pièces moulées pouvant être fabriquées à partir des masses de moulage selon l'invention, à base de polyamide selon l'une quelconque des revendications 1 à 10 ou 16, **caractérisé en ce qu'**elles sont assemblées à elles-mêmes ou à d'autres pièces moulées compatibles d'après des procédés habituels par soudage aux ultrasons, par soudage à fil incandescent, par soudage à friction, par soudage à rotation ou, après un apprêt par des substances actives au laser avec une absorption dans la plage de 800 à 2000 nm, par soudage au laser.

30. Montures de lunettes et verres de lunettes pouvant être fabriqués à partir des masses de moulage selon l'invention, à base de polyamide selon l'une quelconque des revendications précédentes 1 à 10 ou 16, **caractérisés en ce qu'**ils sont fabriqués directement dans un moule comme lunettes complètes en une pièce, consistant en les verres, la monture et les branches.

31. Procédé de fabrication de lunettes pouvant être fabriquées à partir des masses de moulage selon l'invention, à base de polyamide selon l'une quelconque des revendications 1 à 10 ou 16, dans lequel on utilise des procédés d'assemblage pour un design moderne de lunettes avec des assemblages vissés, **caractérisé en ce que** les perçages sont pratiqués directement dans le verre de lunette.

32. Procédé de fixation pour un design de lunettes moderne de montures de lunettes et de verres de lunettes pouvant être fabriqués à partir des masses de moulage selon l'invention, à base de polyamide selon l'une quelconque des revendications précédentes 1 à 10 ou 16, avec des assemblages serrés ou encliquetables et démontables, **caractérisé en ce qu'**au moins un élément de fixation est incorporé directement dans le contour du verre de lunette.
